# FASCICULE DE BREVET EUROPEEN

(11) **EP 4 168 262 B1**
(45) Date de publication et mention de la délivrance du brevet: **07.08.2024**
(21) Numéro de dépôt: 21732417.7
(22) Date de dépôt: 03.05.2021
(51) Int. Cl.: B60K 1/00, B62D 21/11

(54) **GROUPE MOTOPROPULSEUR ÉLECTRIQUE ÉQUIPÉ D'UN DISPOSITIF BI-FONCTION D'IMPACTEUR DE CHOC ET DE RIGIDIFICATION MÉCANIQUE**
ELEKTROMOTOR-ANTRIEBSGRUPPE AUSGESTATTET MIT EINER BI-FUNKTIONALEN EINRICHTUNG ALS AUFPRALLELEMENT UND ALS MECHANISCHE VERSTÄRKUNG
ELECTRIC MOTOR PROPULSION GROUP EQUIPPED WITH A BI-FUNCTIONAL DEVICE AS CRASH IMPACTOR AND AS MECHANICAL REINFORCEMENT

(30) Priorité: 22.06.2020 FR 2006479
(43) Date de publication de la demande: 26.04.2023
(73) Titulaire: Stellantis Auto SAS, 78300 Poissy (FR)
(72) Inventeur: DORE, Martial, 78955 CARRIERES SOUS POISSY (FR)
(86) Numéro de dépôt international: PCT/FR2021/050758
(87) Numéro de publication internationale: WO 2021/260282

(56) Documents cités:
- FR-A1- 2 990 400
- FR-A1- 3 001 660
- KR-A- 20180 019 788
- US-A1- 2019 016 391

## Description

L'invention concerne de manière générale le domaine des véhicules automobiles à chaîne de traction électrique. Plus particulièrement, l'invention se rapporte à un groupe motopropulseur électrique équipé d'un dispositif bi-fonction d'impacteur de choc et de rigidification mécanique, dans un véhicule à chaîne de traction électrique, comme un véhicule électrique ou un véhicule hybride.

Dans un véhicule électrique avec un groupe motopropulseur électrique logé à l'avant de celui-ci, le groupe motopropulseur électrique est supporté au moins en partie par un berceau moteur. Le groupe motopropulseur électrique comprend essentiellement une machine électrique tournante et un réducteur de vitesse. Le berceau moteur assure également la liaison mécanique entre la caisse du véhicule et des pièces dites de liaison au sol telles que des éléments de suspension et de direction du véhicule. Le berceau moteur est conçu notamment pour supporter les efforts engendrés par le couple moteur lors de phases d'accélération ou de décélération du véhicule et pour permettre de préserver l'habitacle du véhicule lors d'un choc. Le berceau moteur est un élément de sécurité important du véhicule et présente des caractéristiques mécaniques, notamment en compression, qui autorisent l'absorption de l'énergie du choc.

Par rapport à un véhicule thermique, un véhicule électrique est alourdi par la présence du pack-batterie de traction électrique qui représente une masse importante. En cas de choc frontal et sans disposition particulière pour empêcher cela, le déplacement du groupe motopropulseur dans le berceau moteur, vers l'habitacle du véhicule, peut être sensiblement plus important que celui observé dans un véhicule thermique.

Il est connu dans l'état de la technique, notamment dans les véhicules thermiques, d'agencer des pièces d'impact et d'ancrage, sous la forme d'impacteurs de choc et de contre-impacteurs de choc, dans le groupe motopropulseur et le berceau moteur, de façon à amortir en cas de choc l'impact du groupe motopropulseur contre le berceau moteur et à canaliser la cinématique du groupe motopropulseur en assurant un ancrage de celui-ci sur le berceau moteur. De telles pièces contribuent efficacement au respect des normes relatives au choc, comme la norme européenne dite « EuroNCAP ».

Ainsi, par le document FR2982829A1, il est connu un dispositif pour la protection, en cas de choc frontal, d'un moteur thermique situé à l'avant d'un véhicule automobile, le véhicule étant équipé d'un berceau moteur et d'un arbre de transmission situé derrière le moteur. Le dispositif comprend un premier élément permettant d'assurer l'accroche du moteur sur le berceau moteur en cas de choc frontal. Le dispositif comprend également un deuxième élément pour protéger le moteur contre un impact de l'arbre de transmission en cas de choc frontal.

Un groupe motopropulseur électrique est connu du document FR 3 001 660 A1.

Par ailleurs, dans un véhicule électrique, le groupe motopropulseur électrique comprenant la machine électrique tournante et le réducteur de vitesse est soumis à un phénomène dit de « bending » qui se caractérise par une flexion/torsion de celui-ci autour d'un ou plusieurs de ses axes. Ce phénomène de « bending » excite des modes de vibration qui dégradent les performances vibro-acoustiques du groupe motopropulseur électrique. Une rigidification mécanique du groupe motopropulseur électrique autoriserait une amélioration de sa qualité sonore.

Il est souhaitable de proposer un groupe motopropulseur électrique de véhicule à chaîne de traction électrique dans lequel sont assurées à moindre coût des fonctions d'impacteur de choc et de rigidification mécanique, autorisant le respect des normes relatives au choc et une meilleure qualité sonore du groupe motopropulseur électrique.

Selon un premier aspect, l'invention concerne un groupe motopropulseur électrique de véhicule à chaîne de traction électrique comprenant une machine électrique tournante, un réducteur de vitesse et des premier et deuxième impacteurs de choc ayant des premières interfaces de fixation mécanique avec le groupe motopropulseur. Conformément à l'invention, le groupe motopropulseur électrique comprend également au moins une barre anti-torsion et les premier et deuxième impacteurs de choc comprennent des deuxièmes interfaces de fixation mécanique avec des extrémités de barre anti-torsion de la barre anti-torsion.

Selon une caractéristique particulière, les premières interfaces de fixation mécanique comportent des orifices traversants adaptés pour une fixation mécanique complémentaire des premier et deuxième impacteurs de choc sur le groupe motopropulseur électrique.

Selon une autre caractéristique particulière, une extrémité de barre anti-torsion est filetée et une deuxième interface de fixation mécanique comprend un orifice taraudé autorisant une fixation par vissage de l'extrémité de barre anti-torsion et/ou une deuxième interface de fixation mécanique comprend un orifice traversant autorisant une fixation par écrou de l'extrémité de barre anti-torsion.

Selon encore une autre caractéristique particulière, les premier et deuxième impacteurs de choc sont fixés mécaniquement respectivement sur le réducteur de vitesse et sur la machine électrique tournante, et le réducteur de vitesse et la machine électrique tournante comprennent des paliers de barre anti-torsion.

Selon encore une autre caractéristique particulière, le premier impacteur de choc est fixé mécaniquement sur un carter de boîte de vitesse du réducteur de vitesse et le deuxième impacteur de choc est fixé mécaniquement sur un carter principal de la machine électrique tournante.

Selon encore une autre caractéristique particulière, le carter principal de la machine électrique tournante, le carter de boîte de vitesse et un carter de connexion du réducteur de vitesse comprennent chacun au moins un palier de barre anti-torsion.

Selon encore une autre caractéristique particulière, la barre anti-torsion est en acier.

Selon encore une autre caractéristique particulière, le dispositif comprend deux barres anti-torsion ayant des extrémités de barre anti-torsion fixées aux deuxièmes interfaces de fixation mécanique des premier et deuxième impacteurs de choc.

L'invention concerne aussi un véhicule à chaîne de traction électrique comprenant un groupe motopropulseur électrique tel que décrit brièvement ci-dessous.

D'autres avantages et caractéristiques de la présente invention apparaîtront plus clairement à la lecture de la description détaillée ci-dessous de plusieurs formes de réalisation particulières de l'invention, en référence aux dessins annexés, dans lesquels :
[Fig.1] La Fig.1 est une vue partielle en perspective d'un groupe motopropulseur électrique équipé d'un dispositif bi-fonction d'impacteur de choc et de rigidification mécanique selon l'invention.
[Fig.2] La Fig.2 est une vue partielle en perspective d'un berceau moteur dans un véhicule comportant le groupe motopropulseur électrique de la Fig.1.
[Fig.3] La Fig.3 est une vue en perspective d'un dispositif bi-fonction d'impacteur de choc et de rigidification mécanique selon l'invention.
[Fig.4] La Fig.4 est une vue en perspective éclatée montrant l'assemblage d'un dispositif bi-fonction d'impacteur de choc et de rigidification mécanique selon l'invention avec une machine électrique tournante et un réducteur de vitesse d'un groupe motopropulseur électrique.
[Fig.5] La Fig.5 est une vue en perspective montrant un ensemble de machine électrique tournante et de réducteur de vitesse d'un groupe motopropulseur électrique équipé d'un dispositif bi-fonction d'impacteur de choc et de rigidification mécanique selon l'invention.
[Fig.6] La Fig.6 est une vue partielle en perspective montrant un premier impacteur de choc du dispositif bi-fonction d'impacteur de choc et de rigidification mécanique selon l'invention monté sur un carter de boîte de vitesse du réducteur de vitesse de l'ensemble de la Fig.5.
[Fig.7] La Fig.7 est une vue plane du premier impacteur de choc de la Fig.6 monté sur le carter de boîte de vitesse du réducteur de vitesse de l'ensemble de la Fig.5.
[Fig.8] La Fig.8 est une vue partielle en perspective montrant un deuxième impacteur de choc du dispositif bi-fonction d'impacteur de choc et de rigidification mécanique selon l'invention monté sur un carter principal de la machine électrique tournante de l'ensemble de la Fig.5.
[Fig.9] La Fig.9 est une vue plane du deuxième impacteur de choc de la Fig.8 monté sur le carter principal de la machine électrique tournante de l'ensemble de la Fig.5.

Le dispositif bi-fonction d'impacteur de choc et de rigidification mécanique selon l'invention est décrit maintenant à travers une forme de réalisation particulière de celui-ci équipant un groupe motopropulseur électrique GEM.

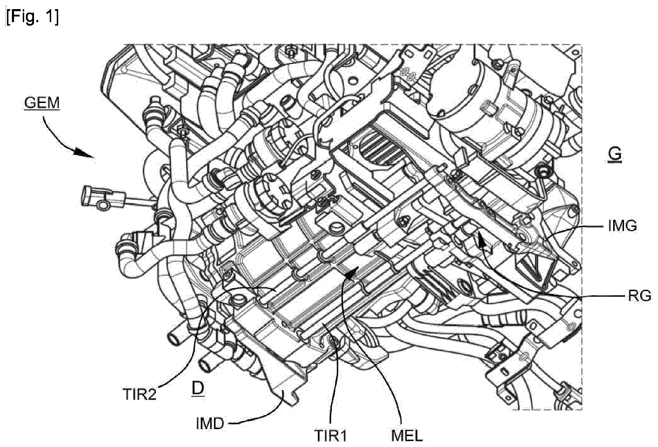

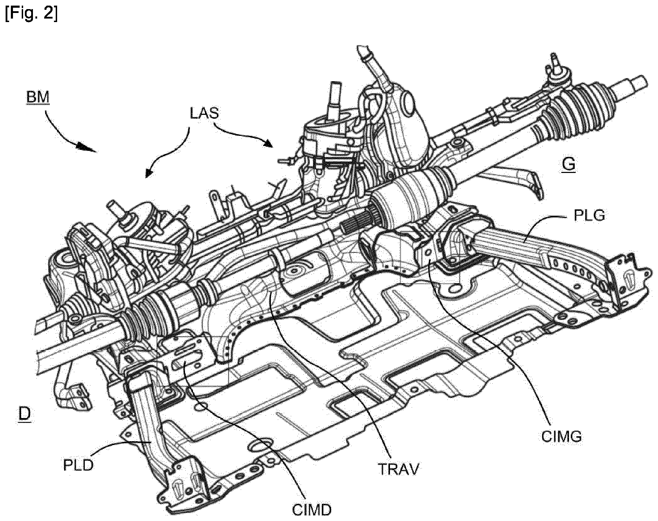

A la Fig.1, il est montré une partie inférieure du groupe motopropulseur électrique GEM dans laquelle est agencé le dispositif bi-fonction de l'invention. Cette partie inférieure du groupe motopropulseur électrique GEM est destinée à venir en regard d'un berceau moteur de véhicule BM visible à la Fig.2.

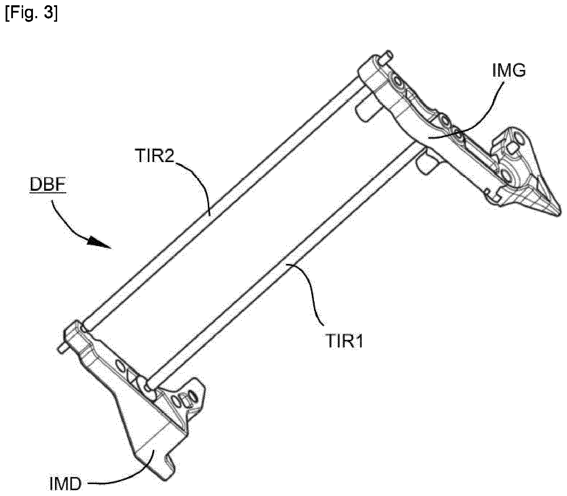

Dans les Figs.2 et 3, les côtés dits « gauche » et « droit » du véhicule sont repérés D et G, respectivement. Dans l'ensemble de la description ci-dessous, les termes « gauche » et « droit » utilisés pour qualifier certains éléments indiquent une localisation de ceux-ci dans le repère d'orientation « gauche/droite » du véhicule.

Le groupe motopropulseur électrique GEM comprend essentiellement une machine électrique tournante MEL et un réducteur de vitesse RG. Conformément à l'invention, le groupe motopropulseur électrique GEM est équipé d'un dispositif bi-fonction, repéré DBF à la Fig.3, qui comporte deux impacteurs de choc IMG et IMD, dits ci-après impacteur de choc gauche et impacteur de choc droit, respectivement, et deux barres anti-torsion TIR1 et TIR2 de rigidification mécanique.

Les impacteurs de choc gauche IMG et droit IMD sont montés respectivement à des positions latérales gauche et droite du groupe motopropulseur électrique GEM. Plus précisément, l'impacteur de choc gauche IMG est fixé par vis sur un carter du réducteur RG et l'impacteur de choc droit IMD est fixé par vis sur un carter de la machine électrique tournante MEL. Les impacteurs de choc IMG, IMD, sont typiquement des pièces métalliques moulées, par exemple, en acier ou en aluminium.

Les barres anti-torsion TIR1, TIR2, se présentent ici sous la forme de deux tirants de section circulaire, typiquement en acier. Les barres anti-torsion TIR1, TIR2, se prolongent parallèlement entre les impacteurs de choc IMG et IMD et ont leurs extrémités fixées mécaniquement à ceux-ci.

En référence plus particulièrement aux Figs.1 et 2, le groupe motopropulseur électrique GEM est logé dans un compartiment moteur avant du véhicule électrique et est supporté au moins en partie par le berceau moteur BM de celui-ci. Le berceau moteur BM assure également la liaison entre la caisse du véhicule et les pièces de liaison au sol LAS telles que les éléments de suspension et de direction du véhicule.

Comme visible à la Fig.2, le berceau moteur BM est formé essentiellement d'un corps transversal TRAV, d'une prolonge latérale gauche PLG et d'une prolonge latérale droite PLD. Le berceau moteur BM est conçu pour supporter les efforts engendrés par le couple moteur et pour préserver l'habitacle du véhicule lors d'un choc. Le corps transversal TRAV est réalisé typiquement avec deux coquilles en tôle emboutie qui sont assemblées entre elles par soudure.

Comme montré à la Fig.2, un contre-impacteur de choc gauche CIMG et un contre-impacteur de choc droit CIMD sont agencés dans le corps transversal TRAV du berceau moteur BM. Plus précisément, les contre-impacteurs de choc CIMG et CIMD sont agencés respectivement dans des parties gauche et droite du corps transversal TRAV, au niveau de la liaison au sol LAS et à proximité de cornes de suspension (non visibles) du berceau moteur. Lors d'un choc, les impacteurs de choc IMG et IMD viennent respectivement s'encastrer dans des cavités des contre-impacteurs de choc CIMG et CIMD. Les impacteurs de choc IMG, IMD et les contre-impacteurs de choc CIMG et CIMD procurent une fonction d'amortissement de l'impact du groupe motopropulseur électrique GEM contre le berceau moteur BM et de canalisation de la cinématique du groupe motopropulseur électrique GEM en assurant un ancrage de celui-ci sur le berceau moteur BM.

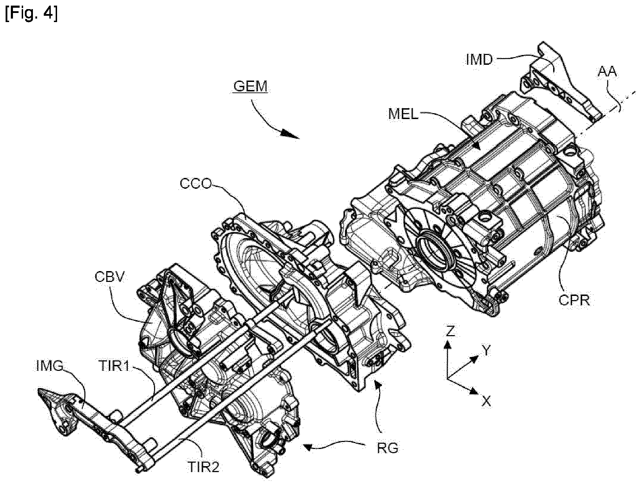

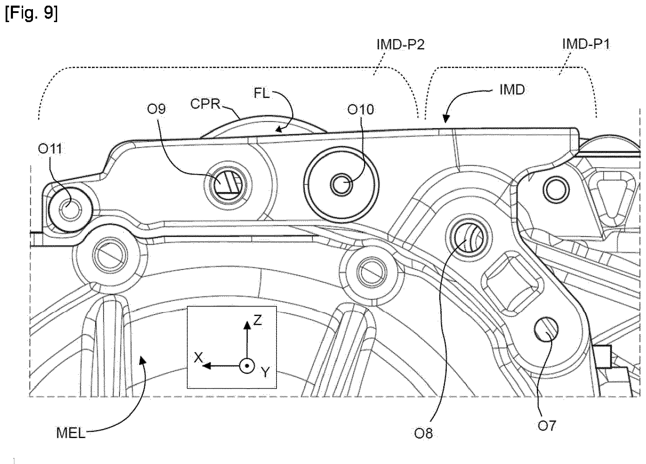

En référence plus particulièrement aux Figs.4 à 9, l'assemblage sur le groupe motopropulseur électrique GEM du dispositif bi-fonction d'impacteur de choc et de rigidification mécanique DBF est maintenant décrit en détail ci-dessous. Dans ces Figs.4 et 9, le groupe motopropulseur électrique GEM et le dispositif DBF sont orientés dans un repère orthogonal XYZ. L'axe Y du repère orthogonal XYZ correspond ici à un axe central longitudinal AA du groupe motopropulseur électrique GEM qui est aussi l'axe central de rotation de la machine électrique tournante MEL. Dans le véhicule, le groupe motopropulseur électrique GEM est monté transversalement dans le compartiment moteur avant et son axe central longitudinal AA est sensiblement perpendiculaire à un axe longitudinal (non représenté) du véhicule.

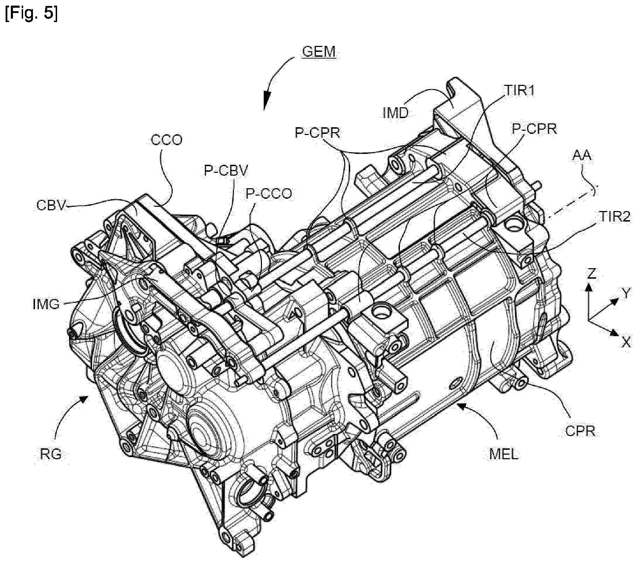

Comme mieux visible aux Figs.4 et 5, le dispositif DBF selon l'invention se monte sur la machine électrique tournante MEL et sur le réducteur de vitesse RG, plus précisément, sur un carter principal CPR de la machine MEL et sur un carter de boîte de vitesse CBV et un carter de connexion CCO du réducteur de vitesse RG. Le carter de connexion CCO procure une interface mécanique d'assemblage entre le réducteur de vitesse RG et la machine électrique tournante MEL.

Les deux barres anti-torsion TIR1, TIR2, se prolongent parallèlement selon l'axe Y entre les impacteurs de choc gauche IMG et droit IMD. Les barres anti-torsion TIR1, TIR2, traversent successivement l'impacteur de choc gauche IMG, le carter de boîte de vitesses CBV, le carter de connexion CCO, le carter principal CPR de la machine électrique MEL et l'impacteur de choc droit IMD. Deux orifices cylindriques sont agencés dans chacun des impacteurs de choc IMG, IMD pour recevoir les extrémités des barres anti-torsion TIR1, TIR2. Plusieurs paliers intermédiaires P-CBV, P-CCO et P-CPR sont compris respectivement dans le carter de boîte de vitesses CBV, le carter de connexion CCO et le carter principal CPR. Les paliers intermédiaires P-CBV, P-CCO et P-CPR sont traversés par les barres anti-torsion TIR1, TIR2, et guident celles-ci. Les paliers intermédiaires P-CBV, P-CCO et P-CPR procurent différents points d'attache mécanique entre les barres anti-torsion TIR1, TIR2, et le groupe motopropulseur électrique GME, de façon à rigidifier mécaniquement le groupe motopropulseur électrique GME.

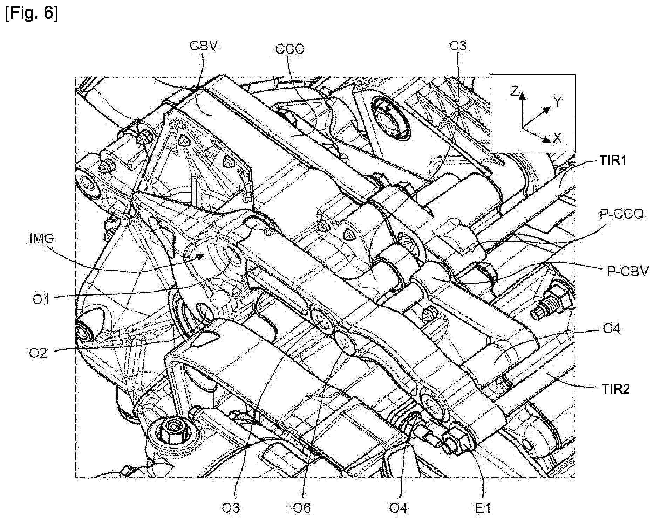

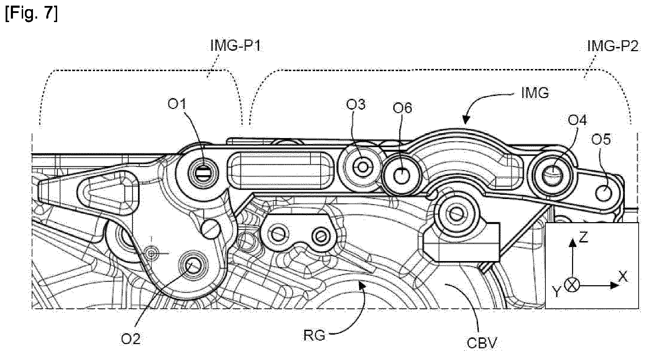

L'impacteur de choc gauche IMG et sa fixation sur le réducteur de vitesse RG, plus précisément sur le carter de boîte de vitesses CBV de celui-ci, sont mieux visibles aux Figs.6 et 7.

L'impacteur de choc gauche IMG comprend, en continuité de matière, une première portion IMG-P1 dédiée à la fonction d'impacteur de choc à proprement parlé et une deuxième portion IMG-P2 dédiée à la fonction de rigidification mécanique. La deuxième portion IMG-P2 forme un prolongement arrière de la première portion IMG-P1, à l'opposée d'une pointe de l'impacteur de choc, qui est destiné à la fixation de premières extrémités des barres de torsion TIR1, TIR2.

La première portion IMG-P1 comprend deux orifices traversants O1 et O2 pour deux vis d'assemblage (non représentées) assurant une fixation mécanique de cette portion IMG-P1 sur le carter de boîte de vitesses CBV. Les orifices traversants O1, O2, procurent ainsi une interface mécanique de fixation de l'impacteur de choc gauche IMG sur le carter de boîte de vitesses CBV du réducteur de vitesse RG.

La deuxième portion IMG-P2 comprend deux autres orifices traversants O3 et O4 pour deux autres vis d'assemblage (non représentées) assurant une interface de fixation mécanique complémentaire de cette portion IMG-P2 sur le carter de boîte de vitesses CBV. Deux colonnes C3 et C4 formant entretoises, traversées respectivement par les orifices traversants O3 et O4, sont comprises dans la deuxième portion IMG-P2. Les colonnes C3 et C4 se prolongent en Y et viennent en appui contre une face du carter de boîte de vitesses CBV comprenant des orifices taraudés pour les vis d'assemblage susmentionnés.

La deuxième portion IMG-P2 comprend également deux orifices O5 et O6 destinés à recevoir les premières extrémités susmentionnées des barres anti-torsion TIR2 et TIR1, respectivement, qui sont filetées. Les orifices O5, O6, procurent ainsi une interface mécanique de fixation des premières extrémités de barre anti-torsion sur l'impacteur de choc gauche IMG. Dans cette forme de réalisation particulière, l'orifice O5 est traversant et un écrou E1 est vissé sur la première extrémité filetée de la barre anti-torsion TIR2. L'autre orifice O6 est taraudé et la première extrémité filetée de la barre anti-torsion TIR1 est directement vissée dans celui-ci.

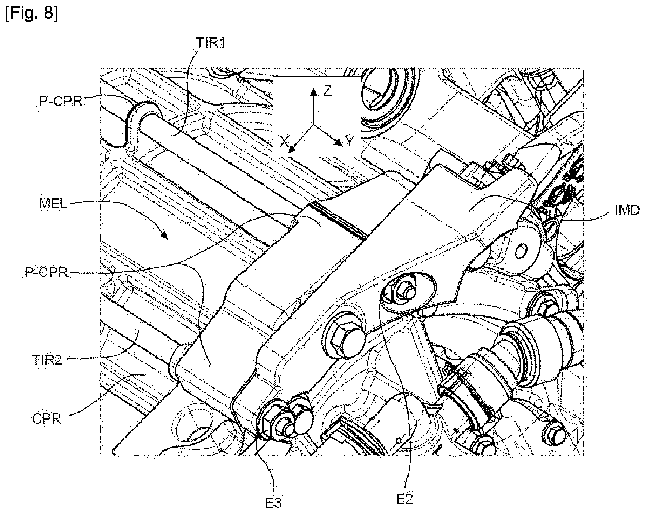

L'impacteur de choc droit IMD et sa fixation sur la machine électrique tournante MEL, plus précisément sur une face latérale FL du carter principal CPR de celle-ci, sont mieux visibles aux Figs.8 et 9.

L'impacteur de choc droit IMD comprend, en continuité de matière, une première portion IMD-P1 dédiée à la fonction d'impacteur de choc à proprement parlé et une deuxième portion IMD-P2 dédiée à la fonction de rigidification mécanique. La deuxième portion IMD-P2 forme un prolongement arrière de la première portion IMD-P1, à l'opposée d'une pointe de l'impacteur de choc, qui est destiné à la fixation de deuxièmes extrémités des barres de torsion TIR1, TIR2.

La première portion IMD-P1 comprend deux orifices traversants O7 et O8 pour deux vis d'assemblage (non représentées) assurant une fixation mécanique de cette portion IMD-P1 sur la face latérale FL du carter principal CPR. Les orifices traversants O7, O8, procurent ainsi une interface mécanique de fixation de l'impacteur de choc droit IMD sur le carter principal CPR de la machine électrique tournante MEL.

La deuxième portion IMD-P2 comprend un autre orifice traversant O9 pour une autre vis d'assemblage (non représentée) assurant une interface de fixation mécanique complémentaire de cette portion IMD-P2 sur la face latérale FL du carter principal CPR.

La deuxième portion IMD-P2 comprend également deux orifices O10 et O11 destinés à recevoir les deuxièmes extrémités susmentionnées des barres anti-torsion TIR1 et TIR2, respectivement, qui sont filetées. Les orifices O10, O11, procurent ainsi une interface mécanique de fixation des deuxièmes extrémités de barre anti-torsion sur l'impacteur de choc droit IMD. Les orifices O10 et O11 sont traversants et des écrous E2 et E3 sont vissés sur les deuxièmes extrémités filetées des barres anti-torsion TIR1 et TIR2, respectivement.

Dans cette forme particulière de réalisation du dispositif DBF selon l'invention, les barres anti-torsion TIR1 et TIR2 sont mises en tension par le serrage des écrous E1 à E3 (cf. Figs.6 et 8) et rigidifient ainsi mécaniquement le groupe motopropulseur électrique GME. Cette rigidification procurée par le dispositif DBF selon l'invention permet de minimiser le phénomène de « bending » susmentionné du groupe motopropulseur électrique GME et améliore les performances vibro-acoustiques de celui-ci.

L'invention facilite, grâce à l'ajout de barres anti-torsion, la rigidification mécanique d'un groupe motopropulseur électrique équipé de deux impacteurs de choc sur des positions latérales opposées. Les impacteurs de choc sont judicieusement utilisés pour la fixation des barres de torsion, mutualisant ainsi des fixations existantes sur des carters du groupe motopropulseur électrique, au bénéfice d'un moindre coût économique de l'intégration de l'invention dans le groupe motopropulseur électrique. Les modifications nécessaires se limiteront essentiellement à l'ajout sur les impacteurs de choc de portions destinées à supporter les barres anti-torsion, à un renforcement de la fixation mécanique des impacteurs de choc sur le groupe motopropulseur électrique et à l'ajout de paliers dans des carters du groupe motopropulseur électrique pour les barres de torsion.

La forme de réalisation plus particulièrement décrite ici du dispositif bi-fonction d'impacteur de choc et de rigidification mécanique de l'invention comporte deux barres anti-torsion. Bien entendu, l'invention n'est pas limitée à ce nombre de barres anti-torsion et des dispositifs de l'invention pourront comprendre une ou deux barres anti-torsion ou davantage.

L'invention ne se limite pas aux formes de réalisation particulières qui ont été décrites ici à titre d'exemple. L'homme du métier, selon les applications de l'invention, pourra apporter différentes modifications et variantes entrant dans le champ de protection de l'invention, comme défini par les revendications.

## Revendications

1. Groupe motopropulseur électrique de véhicule à chaîne de traction électrique (GEM) comprenant une machine électrique tournante (MEL), un réducteur de vitesse (RG) et des premier et deuxième impacteurs de choc (IMG ; IMD) ayant des premières interfaces de fixation mécanique (O1, O2 ; O7, O8) avec ledit groupe motopropulseur (GEM), **caractérisé en ce qu'**il comprend également au moins une barre anti-torsion (TIR1, TIR2) et lesdits premier et deuxième impacteurs de choc (IMG ; IMD) comprennent des deuxièmes interfaces de fixation mécanique (O5, O6 ; O10, O11) avec des extrémités de barre anti-torsion de ladite barre anti-torsion (TIR1, TIR2).

2. Groupe motopropulseur électrique selon la revendication 1, **caractérisé en ce que** lesdites premières interfaces de fixation mécanique comportent des orifices traversants (O3, O4; O9) adaptés pour une fixation mécanique complémentaire desdits premier et deuxième impacteurs de choc (IMG ; IMD) sur ledit groupe motopropulseur électrique (GEM).

3. Groupe motopropulseur électrique selon la revendication 1 ou 2, **caractérisé en ce qu'**une dite extrémité de barre anti-torsion est filetée et une dite deuxième interface de fixation mécanique comprend un orifice taraudé (O6) autorisant une fixation par vissage de ladite extrémité de barre anti-torsion et/ou une dite deuxième interface de fixation mécanique comprend un orifice traversant (O5 ; O10, O11) autorisant une fixation par écrou (E1 ; E2, E3) de ladite extrémité de barre anti-torsion.

4. Groupe motopropulseur électrique selon l'une quelconque des revendications 1 à 3, **caractérisé en ce que** lesdits premier et deuxième impacteurs de choc (IMG ; IMD) sont fixés mécaniquement respectivement sur ledit réducteur de vitesse (RG) et sur ladite machine électrique tournante (MEL), et ledit réducteur de vitesse (RG) et ladite machine électrique tournante (MEL) comprennent des paliers de barre anti-torsion (P-CPR ; P-CBV, P-CCO).

5. Groupe motopropulseur électrique selon la revendication 4, **caractérisé en ce que** ledit premier impacteur de choc (IMG) est fixé mécaniquement sur un carter de boîte de vitesse (CBV) dudit réducteur de vitesse (RG) et ledit deuxième impacteur de choc (IMD) est fixé mécaniquement sur un carter principal (CPR) de ladite machine électrique tournante (MEL).

6. Groupe motopropulseur électrique selon la revendication 5, **caractérisé en ce que** ledit carter principal (CPR) de ladite machine électrique tournante (MEL), ledit carter de boîte de vitesse (CBV) et un carter de connexion (CCO) dudit réducteur de vitesse (RG) comprennent chacun au moins un dit palier de barre anti-torsion (P-CPR ; P-CBV, CCO).

7. Groupe motopropulseur électrique selon l'une quelconque des revendications 1 à 6, **caractérisé en ce que** ladite barre anti-torsion (TIR1, TIR2) est en acier.

8. Groupe motopropulseur électrique selon l'une quelconque des revendications 1 à 7, **caractérisé en ce que** qu'il comprend deux dites barres anti-torsion (TIR1, TIR2) ayant des extrémités de barre anti-torsion fixées auxdites deuxièmes interfaces de fixation mécanique (O5, O6 ; O10, O11) desdits premier et deuxième impacteurs de choc (IMG ; IMD).

9. Véhicule à chaîne de traction électrique, **caractérisé en ce qu'**il comprend un groupe motopropulseur électrique (GEM) selon l'une quelconque des revendications 1 à 8. 1

## Patentansprüche

1. Elektrischer Antriebsstrang eines Fahrzeugs mit elektrischem Antriebsstrang (GEM), bestehend aus einer rotierenden elektrischen Maschine (MEL), einem Drehzahlminderer (RG) und ersten und zweiten Stoßdämpfern (IMG; IMD) mit ersten mechanischen Befestigungsschnittstellen (O1, O2; O7, O8). mit dem Antriebsstrang (GEM), **dadurch gekennzeichnet, dass** er außerdem mindestens einen Torsionsstab (TR1, TR2) umfasst und der erste und der zweite Impaktor (IMG; IMD) zweite mechanische Befestigungsschnittstellen (O5, O6; 010, 011) umfassen, mit den Enden der Verdrehsicherung (TR1, TR2).

2. Elektrischer Antriebsstrang nach Anspruch 1, **dadurch gekennzeichnet, dass** die ersten mechanischen Befestigungsschnittstellen Durchgangslöcher (O3, O4; O9) umfassen, die für die komplementäre mechanische Befestigung des ersten und zweiten Stoßstoßkörpers (IMG; IMD) am elektrischen Gruppenantriebsstrang (GEM) ausgelegt sind..

3. Elektrischer Antriebsstrang nach Anspruch 1 oder 2, **dadurch gekennzeichnet, dass** das verdrehsichere Stangenende mit einem Gewinde versehen ist und die zweite mechanische Befestigungsschnittstelle ein Gewindeloch (O6) umfasst, das eine Schraubbefestigung des verdrehsicheren Stangenendes und/oder der zweiten mechanischen Befestigung ermöglicht die Befestigungsschnittstelle ein Durchgangsloch (O5; O10, O11) umfasst, das die Befestigung des Verdrehschutzstangenendes mit einer Mutter (E1; E2, E3) ermöglicht.

4. Elektrischer Antriebsstrang nach einem der Ansprüche 1 bis 3, **dadurch gekennzeichnet, dass** der erste und der zweite Stoßdämpfer (IMG; IMD) jeweils mechanisch am Untersetzungsgetriebe (RG) und an der rotierenden elektrischen Maschine (MEL) und an der Drehzahl befestigt sind Das Untersetzungsgetriebe (RG) und die rotierende elektrische Maschine (MEL) umfassen Verdrehstablager (P-CPR; P-CBV, P-CCO).

5. Elektrischer Antriebsstrang nach Anspruch 4, **dadurch gekennzeichnet, dass** der erste Stoßdämpfer (IMG) mechanisch an einem Getriebegehäuse (CBV) des Untersetzungsgetriebes (RG) befestigt ist und der zweite Stoßdämpfer (IMD) mechanisch an einem Hauptgehäuse befestigt ist ( CPR) der rotierenden elektrischen Maschine (MEL).

6. Elektrischer Antriebsstrang nach Anspruch 5, **dadurch gekennzeichnet, dass** das Hauptgehäuse (CPR) der rotierenden elektrischen Maschine (MEL), das Getriebegehäuse (CBV) und ein Verbindungsgehäuse (CCO) des Drehzahlminderers (RG) jeweils mindestens eines umfassen besagtes Antitorsionsstablager (P-CPR; P-CBV, CCO).

7. Elektrischer Antriebsstrang nach einem der Ansprüche 1 bis 6, **dadurch gekennzeichnet, dass** der Torsionsstab (TR1, TR2) aus Stahl besteht.

8. Elektrischer Antriebsstrang nach einem der Ansprüche 1 bis 7, **dadurch gekennzeichnet, dass** er zwei Verdrehschutzstangen (TR1, TR2) umfasst, deren Verdrehschutzstangenenden an den zweiten mechanischen Befestigungsschnittstellen (O5, O6; 010, 011) befestigt sind. des ersten und zweiten Schockimpaktors (IMG; IMD).

9. Fahrzeug mit elektrischem Antriebsstrang, **dadurch gekennzeichnet, dass** es einen elektrischen Antriebsstrang (GEM) nach einem der Ansprüche 1 bis 8 umfasst.

## Claims

1. Electric powertrain of an electric powertrain (GEM) vehicle comprising a rotating electric machine (MEL), a speed reducer (RG) and first and second shock impactors (IMG; IMD) having first mechanical attachment interfaces ( O1, O2; O7, O8) with said powertrain (GEM), **characterized in that** it also comprises at least one anti-torsion bar (TR1, TR2) and said first and second impactors (IMG; IMD) comprise second mechanical fixing interfaces (O5, O6; 010, 011) with anti-twist bar ends of said anti-twist bar (TR1, TR2).

2. Electric powertrain according to claim 1, **characterized in that** said first mechanical fixing interfaces comprise through holes (O3, O4; O9) adapted for complementary mechanical fixing of said first and second shock impactors (IMG; IMD) on said group electric powertrain (GEM).

3. Electric powertrain according to claim 1 or 2, **characterized in that** said anti-twist bar end is threaded and said second mechanical fixing interface comprises a threaded hole (O6) allowing screw fixing of said bar end anti-twist and/or a said second mechanical fixing interface comprises a through hole (O5; 010, 011) allowing fixing by nut (E1; E2, E3) of said anti-twist bar end.

4. Electric powertrain according to any one of claims 1 to 3, **characterized in that** said first and second shock impactors (IMG; IMD) are mechanically fixed respectively on said speed reducer (RG) and on said rotating electric machine (MEL ), and said speed reducer (RG) and said rotating electric machine (MEL) comprise anti-twist bar bearings (P-CPR; P-CBV, P-CCO).

5. Electric powertrain according to claim 4, **characterized in that** said first shock impactor (IMG) is mechanically fixed on a gearbox housing (CBV) of said speed reducer (RG) and said second shock impactor (IMD) is mechanically fixed to a main casing (CPR) of said rotating electric machine (MEL).

6. Electric powertrain according to claim 5, **characterized in that** said main casing (CPR) of said rotating electric machine (MEL), said gearbox casing (CBV) and a connection casing (CCO) of said speed reducer (RG ) each comprise at least one said anti-torsion bar bearing (P-CPR; P-CBV, CCO).

7. Electric powertrain according to any one of claims 1 to 6, **characterized in that** said anti-torsion bar (TR1, TR2) is made of steel.

8. Electric powertrain according to any one of claims 1 to 7, **characterized in that** it comprises two said anti-twist bars (TR1, TR2) having anti-twist bar ends fixed to said second mechanical fixing interfaces (O5 , O6; 010, 011) of said first and second shock impactors (IMG; IMD).

9. Electric powertrain vehicle, **characterized in that** it comprises an electric powertrain (GEM) according to any one of claims 1 to 8.
